# EUROPEAN PATENT APPLICATION

(11) **EP 2 381 291 A1**
(43) Date of publication of application: **26.10.2011**
(21) Application number: 10168682.2
(22) Date of filing: 07.07.2010
(51) Int. Cl.: G02B 27/22, G02B 27/01, G02C 7/10, G02C 9/00, H04N 13/00, G02B 27/00

(54) **Vision correction lens assembly for viewing three-dimensional (3D) images**

(30) Priority: 23.04.2010 KR 20100037712; 22.04.2010 KR 20100037267
(71) Applicant: Korea O.G.K CO. LTD., Wonju-si, Gangwon-do 220-822 (KR)
(72) Inventor: Park, Su An, 220-822, Wonju-si (KR)
(74) Representative: Ihle, Kornelia

(57) **Abstract**

Disclosed is a lens assembly for viewing three-dimensional (3D) images. More specifically, disclosed is a lens assembly for viewing three-dimensional (3D) images wherein one lens (40) is integrated with a prescription lens (33) alizing three-dimensional imaging and processed to be suited to the eyesight of a viewer.

The lens assembly includes a liquid crystal panel provided in the center thereof, a pair of glass panels adhered to both sides of the liquid crystal panel, a pair of TAC panels adhered to both sides of the glass panels, a pair of PVA panels adhered to both sides of the TAC panels, a pair of TAC panels adhered to both sides of the PVA panels, a phase difference film adhered to the outer TAC panel and a prescription lens integrated with the inner TAC panel, thus advantageously imparting three dimensional imaging and vision correction effects to one lens and thus realizing comfortable wearing, and clear and superior three-dimensional imaging.

## Description

### BACKGROUND OF THE INVENTION

### Field of the Invention

The present invention relates to a vision correction lens assembly for viewing three-dimensional (3D) images. More specifically, the present invention relates to a lens assembly for viewing three-dimensional (3D) images realizing both three dimensional imaging and vision correction through one lens.

### Description of the Related Art

Imaging technologies to realize three-dimensional images are divided into active imaging (using an LCD) and passive imaging (using a polarizing film). Of these, the active imaging system has a structure comprising a polarizing layer/glassy liquid crystal/polarizing layer, wherein the polarizing layer may be composed of TAC/PVA/TAC or PC/PVA/PC.

A structure wherein prescription glasses are superimposed on 3D active glasses provided with such a lens, that is, two glasses are worn simultaneously, may disadvantageously cause considerable user discomfort and cannot render viewing with superior three-dimensional effects and clear image quality due to light refraction or deterioration in light transmission in the space provided between the prescription lens and the 3D lens.

Accordingly, the present invention solves the afore-mentioned problems, i.e., inconvenience of users having different eyesights and drawbacks of conventional lens assemblies for viewing three-dimensional (3D) images.

### SUMMARY OF THE INVENTION

Therefore, the present invention has been made in view of the above problems and provides a lens assembly for viewing three-dimensional (3D) images wherein the inner side of one lens is integrally stuck or adhered to a prescription lens which realizes three dimensional imaging and is suited to the eyesight of a viewer, to realize comfortable wearing, and clear and superior three-dimensional imaging.

In accordance with one aspect of the present invention, provided is a lens assembly for viewing three-dimensional (3D) images through an LCD panel lens portion (active manner), wherein a prescription lens for vision correction is joined to the inner side (toward the eye of a wearer) of the LCD panel lens portion providing three-dimensional (3D) imaging.

In one embodiment, the lens assembly may include: a liquid crystal panel provided in the center thereof; a pair of glass panels adhered to both sides of the liquid crystal panel; a pair of TAC panels adhered to both sides of the glass panels; a pair of PVA panels adhered to both sides of the TAC panels; a pair of TAC panels adhered to both sides of the PVA panels; a phase difference film adhered to the outer TAC panel; and a prescription lens adhered to the inner TAC panel.

The prescription lens may be composed of a material selected from CR, PC, glass, acryl and organic compounds.

In another embodiment, the LCD lens portion may include: a liquid crystal panel provided in the center; a pair of glass panels adhered to both sides of the liquid crystal panel; a pair of PC panels adhered to both sides of the glass panels; a pair of PVA panels adhered to both sides of the PC panels; a pair of PC panels adhered to both sides of the PVA panels; a phase difference film adhered to the outer PC panel; and a prescription lens adhered to the inner PC panel.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a perspective view illustrating eyeglasses for viewing three-dimensional (3D) images of the present invention;
FIG. 2 is an exploded sectional view illustrating a lens assembly for viewing three-dimensional (3D) images of the present invention;
FIG. 3 is an exploded sectional view illustrating a lens assembly for viewing three-dimensional (3D) images of the present invention;
FIG. 4 is an exploded sectional view illustrating a lens assembly for viewing three-dimensional (3D) images of the present invention; and
FIG. 5 is an exploded sectional view illustrating a lens assembly for viewing three-dimensional (3D) images of the present invention.

### DETAILED DESCRIPTION OF THE INVENTION

Hereinafter, general configurations of the present invention and specific effects obtained therefrom will be described with reference to the annexed drawings in detail.

Terms and words used in the specification and claims should not be construed as being restricted to ordinary meanings or dictionary definitions. Based on the fundamental rule that an inventor can appropriately define the meanings of terms so that the disclosure will be thorough and complete and will fully convey the scope of the invention to those skilled in the art, terms and words used in the specification and claims should be construed consistently with the technical spirit of the invention. Therefore, since embodiments described in the description and constructions illustrated in the drawings are only exemplary embodiments of the present invention and do not mean all of the sprit and scope of the present invention, it will be understood that various modifications and substitutions as alternatives of the embodiments may be made therein at the filing date. The same reference numerals designate identical elements throughout the drawings.

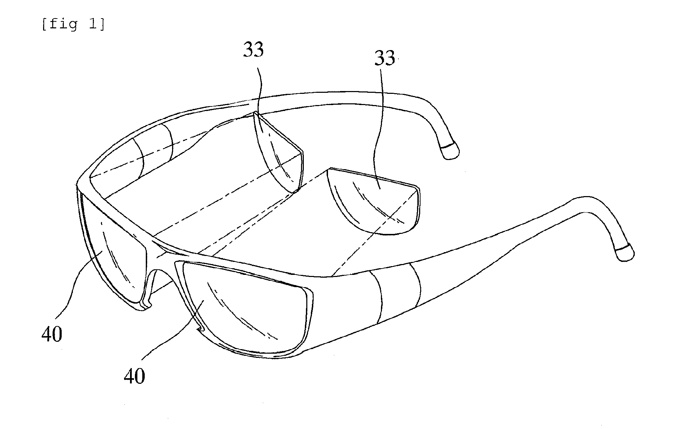

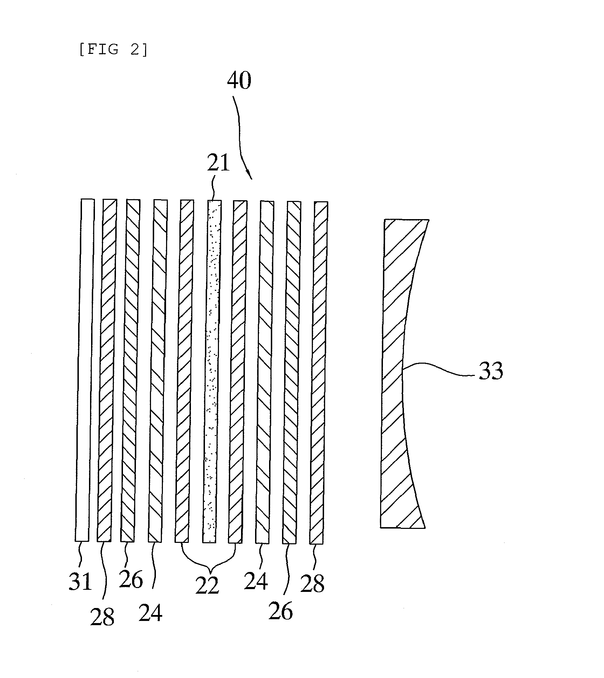

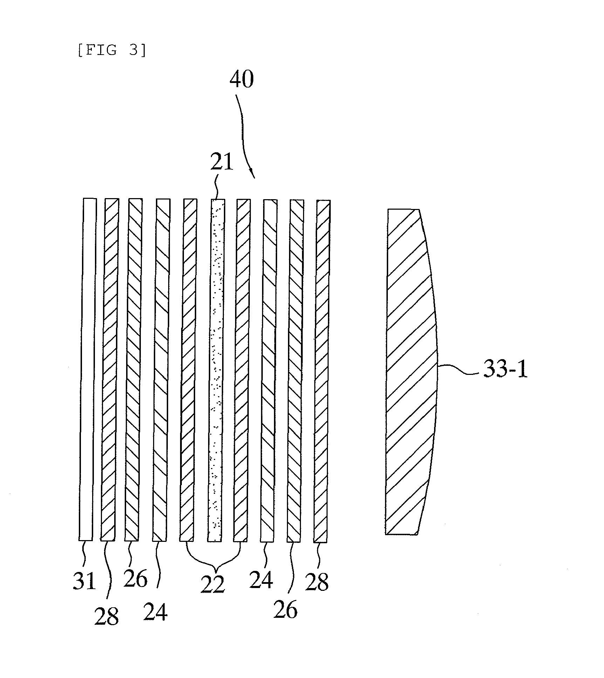

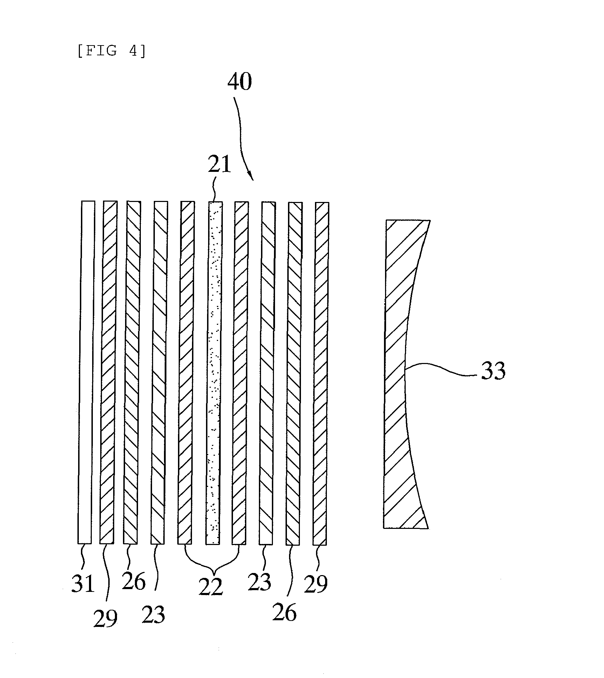

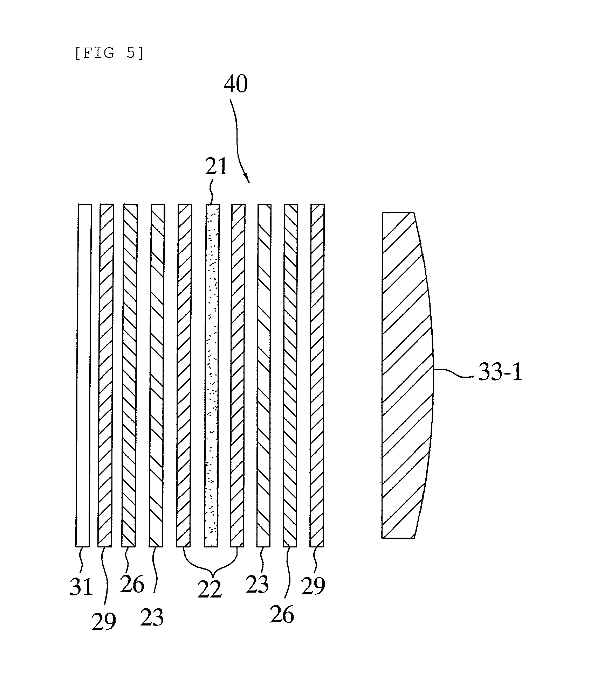

FIG. 1 is an assembled perspective view illustrating a state wherein a prescription lens is joined to eyeglasses for viewing three-dimensional (3D) images. FIG. 2 is an exploded sectional view illustrating a lens assembly for viewing three-dimensional (3D) images of the present invention. FIG. 3 is an exploded sectional view illustrating a lens assembly for viewing three-dimensional (3D) images of the present invention. FIG. 4 is an exploded sectional view illustrating a lens assembly for viewing three-dimensional (3D) images of the present invention. FIG. 5 is an exploded sectional view illustrating a lens assembly for viewing three-dimensional (3D) images of the present invention.

The present invention provides a lens assembly for viewing three-dimensional (3D) images wherein the lens assembly for viewing three-dimensional (3D) images including an active lens (LCD panel lens portion) is integrated with a prescription lens for viewing three-dimensional images, to minimize light refraction in the space provided between the prescription lens and the liquid crystal lens and thus improve light transmission, thereby realizing superior three-dimensional imaging and clear image quality.

The lens assembly is characterized in that the lens assembly is provided at the inner side (toward the eye of a wearer) thereof with a prescription lens for vision correction, to realize three-dimensional (3D) imaging through an LCD lens portion 40 (active manner).

As shown in FIGS. 1 and 2, the LCD panel lens portion comprises a liquid crystal panel 21 provided in the center thereof, a pair of glass panels 22 mounted at both sides of the liquid crystal panel 21, to protect the liquid crystal panel 21, and a pair of TAC films 24, a pair of PVA films 26, and a pair of TAC films 28 stuck or adhered to the outer sides of the glass panel 22 such that they are laminated in this order.

In addition, a phase difference film is adhered to the outer TAC panel 28 and a prescription lens 33 is adhered to the inner TAC panel 28.

The prescription lens 33 or 33-1 is composed of a material selected from CR, PC, glass, acryl and organic compounds and is processed to be suited to the eyesight of a viewer.

Of the afore-mentioned elements, the liquid crystal panel 21 is soft and is thus provided with the glass panel 22 at both sides thereof to protect the liquid crystal panel.

The TAC (triacetyl cellulose) films 24 integrally adhered to both sides of the glass panel 22 are oriented in an optically identical direction and exhibit superior transparency and strength, and good dimensional stability when faced with variations in temperature and humidity.

In addition, the PVA (polyvinyl alcohol) film 26 adhered to the outer side of the TAC (triacetyl cellulose) film 24 is prepared through stretching and dying processes including stretching a film in one direction and arranging a substance such as iodine, dichroic dyes or the like between a PVA polymer in the other direction, so that the PVA film 26 passes light emitted in one direction and absorbs light emitted in the other direction, thereby acting as a polarizer.

The TAC film exhibiting the same effects as mentioned above is adhered to the outer side of the PVA film 26.

The phase difference film 31 is adhered to the outer side of the outer TAC film 28 and enables separate transfer of left/right imaging and polarizing to the eyes of viewers through the lens and realizes binocular disparity, enabling three-dimensional imaging.

A prescription lens 33 is integrally joined to the inner TAC film 28 by sticking or adhesion.

The prescription lens 33 is processed based on the previously measured eyesight of the user, which is composed of a material selected from CR and PC which exhibit the same effects.

As shown in FIGS. 2 and 3, the prescription lens 33 or 33-1 may have a flat outer surface and a concave or convex inner surface. Alternatively, the prescription lens 33 or 33-1 may have a convex outer surface and a concave or convex inner surface.

Other embodiments of the present invention will be illustrated with reference to FIGS. 4 and 5 in detail.

In addition, the lens assembly for viewing 3D images through an LCD panel lens portion 40 is characterized in that a prescription lens 30 or 33-1 for vision correction is joined to the inner side (toward the eye of a wearer) of the LCD panel lens portion providing three-dimensional (3D) images.

The LCD panel lens portion 40 comprises a liquid crystal panel 21 provided in the center thereof, a pair of glass panels 22 mounted at both sides of the liquid crystal panel 21, to protect the liquid crystal panel 21, and a pair of PC panels 23, a pair of PVA films 26, and a pair of PC panels 29 stuck or adhered to the outer sides of the glass panel 22 such that they are laminated in this order.

In addition, a phase difference film 31 is adhered to the outer PC panel 29 and a prescription lens 33 is adhered to the inner PC panel 29.

The prescription lens 33 is composed of a material selected from CR, PC, glass, acryl and organic compounds and is processed to be suited to the eyesight of a viewer.

Of the afore-mentioned elements, the liquid crystal 21 panel, the PVA film 26, the phase difference film 31 and the prescription lens 33 exhibit the same effects as mentioned above.

As mentioned above, the present invention provides a lens assembly for viewing three-dimensional (3D) images wherein one lens is integrated with a prescription lens 33 or 33-1 realizing three dimensional imaging and being processed to be suited to the eyesight of a viewer, realizing providing comfortable wearing and superior-quality imaging.

The prescription lens 33 and 33-1 of the present invention may have a flat outer surface and a concave (or convex) inner surface. Alternatively, the prescription lens 33 and 33-1 of the present invention may have a convex outer surface and a concave (or convex) inner surface.

As apparent from the fore-going, the present invention advantageously provides a lens assembly for viewing three-dimensional (3D) images wherein one lens is integrated with a prescription lens realizing three dimensional imaging and being suitable for a viewer having poor eyesight, thus advantageously providing comfortable wearing, and clear and superior image quality and thus realizing more interesting 3D imaging.

The present invention advantageously provides a lens assembly for viewing three-dimensional (3D) images wherein a lens for viewing three dimensional images is integrated with a prescription lens, thus considerably advantageously realizing three dimensional imaging without wearing any prescription lens.

The lens for viewing three-dimensional images is integrated with a prescription lens processed to be suited to the poor eyesight of a viewer, thus advantageously providing comfortable wearing and clear 3D imaging.

The lens assembly eliminates the necessity of wearing a prescription lens on a lens for viewing three dimensional imaging, thus advantageously providing comfortable and clear superior image-quality imaging and thus realizing more interesting 3D imaging.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A lens assembly for viewing three-dimensional (3D) images through an LCD panel lens portion (active manner),
wherein a prescription lens for vision correction is joined to the inner side (toward the eye of a wearer) of the LCD panel lens portion providing three-dimensional (3D) images.

2. The lens assembly according to claim 1, wherein the prescription lens is integrally joined to the inner side of the LCD panel lens portion by sticking or adhering.

3. The lens assembly according to claim 1, wherein the LCD panel lens portion comprises:
a liquid crystal panel provided in the center thereof;
a pair of glass panels adhered to both sides of the liquid crystal panel;
a pair of TAC panels adhered to both sides of the glass panels;
a pair of PVA panels adhered to both sides of the TAC panels;
a pair of TAC panels adhered to both sides of the PVA panels; and
a phase difference film adhered to the outer TAC panel.

4. The lens assembly according to claim 1, wherein the prescription lens is composed of a material selected from CR, PC, glass, acryl and organic compounds.

5. The lens assembly according to claim 1, wherein the LCD panel lens portion comprises:
a liquid crystal panel provided in the center thereof;
a pair of glass panels adhered to both sides of the liquid crystal panel;
a pair of PC panels adhered to both sides of the glass panels;
a pair of PVA panels adhered to both sides of the PC panels;
a pair of PC panels adhered to both sides of the PVA panels; and
a phase difference film adhered to the outer PC panel.

6. The lens assembly according to claim 1, wherein the prescription lens has a flat outer surface and a concave or convex inner surface.

7. The lens assembly according to claim 1, wherein the prescription lens has a convex outer surface and a concave or convex inner surface.

8. The lens assembly according to claim 1, wherein the LCD panel lens portion is further provided with a phase difference film.
